# DEMANDE DE BREVET EUROPEEN

(11) **EP 2 772 457 A1**
(43) Date de publication de la demande: **03.09.2014**
(21) Numéro de dépôt: 14157545.6
(22) Date de dépôt: 03.03.2014
(51) Int. Cl.: B65G 47/08, B65G 47/54, B65B 1/32

(54) **Installation d'aide au conditionnement d'articles**

(30) Priorité: 01.03.2013 FR 1351858
(71) Demandeur: Systec Engineering, 59236 Frelinghien (FR)
(72) Inventeur: Darras, Jean-Baptiste, 59130 LAMBERSART (FR)
(74) Mandataire: Balesta, Pierre

(57) **Abrégé**

Installation (10) de regroupement d'articles (12), notamment de légumes, comportant :
• un premier convoyeur (18) ayant une première direction de déplacement (d1) dirigée vers une première extrémité (18a) du premier convoyeur (18) ;
• une station d'amenée (20) des articles (12) sur le premier convoyeur (18) ;

La direction d'amenée (d0) est transversale à la première direction de déplacement (d1). Le premier convoyeur (18) comporte une première bande de transport (22) et des moyens de réception mobiles qui sont configurés pour positionner les articles (12) au-dessus de la première bande de transport (22), et pour transférer les articles (12) sur la première bande de transport (22) pour qu'ils soient transportés vers la première extrémité (18a) du premier convoyeur (18). L'installation (10) comporte en outre un premier accumulateur (28) disposé à la première extrémité (18a) du premier convoyeur (18) pour recevoir et regrouper les articles (12).

## Description

### Arrière-plan de l'invention

La présente invention a trait au domaine des installations de conditionnement d'articles et notamment le conditionnement de légumes qui peuvent être relativement fragile à manipuler.

Le conditionnement des articles est une opération délicate, en particulier lorsque les articles sont des légumes, telles des endives ou d'autres articles particulièrement fragiles.

Traditionnellement, les installations comportent un premier convoyeur et un deuxième convoyeur associé au premier convoyeur.

Le premier convoyeur achemine les articles à la hauteur d'opérateurs qui vont réaliser la sélection des articles qui sont ensuite regroupés de façon manuelle par les opérateurs sur le deuxième convoyeur. Puis, un autre opérateur insère les articles dans des moyens de conditionnement. On peut citer, notamment, le document DE 1057533.

Cependant, l'inconvénient de ce type d'installation est qu'elle présente des postes de travail non ergonomiques et demande une répétition importante des manipulations pour les opérateurs.

En outre, un second inconvénient est l'emprise au sol de ce type d'installation qui nécessite une surface relativement importante.

Un autre inconvénient est l'ergonomie de l'installation pour les opérateurs qui réalisent un nombre important de manipulations dont le but est de trier, sélectionner et regrouper les articles à conditionner.

### Objet et résumé de l'invention

Un but de l'invention est de proposer une installation d'aide au conditionnement d'articles remédiant aux inconvénients précités.

Pour ce faire, l'invention porte sur une installation de regroupement d'articles, notamment de légumes, comportant :
- un premier convoyeur ayant une première direction de déplacement dirigée vers une première extrémité du premier convoyeur ;
- une station d'amenée des articles sur le premier convoyeur ;
l'invention se définit en outre par le fait que la direction d'amenée est transversale à la première direction de déplacement, et le premier convoyeur comporte une première bande de transport ainsi que des moyens de réception mobiles pour positionner les articles au-dessus de la première bande de transport, et pour transférer les articles sur la première bande de transport afin qu'ils soient transportés vers la première extrémité du premier convoyeur. L'installation selon l'invention comporte en outre un premier accumulateur disposé à la première extrémité du premier convoyeur et présente une position de réception pour recevoir et regrouper les articles. Le premier accumulateur comporte une deuxième bande de transport ayant une troisième direction de déplacement. Le premier accumulateur est monté pivotant autour d'un premier axe parallèle à la troisième direction de déplacement afin de pouvoir passer dans une position d'évacuation.

La station d'amenée permet, tout d'abord, de recevoir les articles à conditionner. Partant de la station d'amenée, les articles vont être déplacés vers les moyens de réception mobiles selon la direction d'amenée, qui est transversale à la première direction de transport du premier convoyeur.

Ainsi, le fait que la direction d'amenée soit transversale à la première direction de transport permet d'agencer la station d'amenée et le premier convoyeur afin de minimiser le parcours des articles, et de réduire l'encombrement de l'installation.

En outre, les moyens de réception mobiles reçoivent les articles provenant de la station d'amenée et les positionnent au-dessus de la première bande de transport du premier convoyeur. A ce stade, il n'y a pas de contact entre les articles et la première bande de transport.

Puis, les moyens de réception mobiles sont actionnés de manière à descendre les articles afin de les poser sur la première bande de transport du premier convoyeur.

Une des fonctions des moyens de réception mobiles est donc de réaliser le transfert des articles entre la station d'amenée et la première bande de transport du premier convoyeur sans que les articles ne subissent aucune détérioration et manipulation de la part de l'opérateur.

Lorsque les articles sont disposés sur la première bande de transport du premier convoyeur, lesdits articles ne sont plus en contact avec les moyens de réception mobiles, et la première bande de transport du premier convoyeur est actionnée de sorte que les articles soient dirigés vers la première extrémité du premier convoyeur.

En outre, le premier accumulateur est disposé à la première extrémité du premier convoyeur de manière à recevoir successivement les articles provenant de la première bande de transport du premier convoyeur, et ainsi grouper lesdits articles successivement reçus. Un intérêt du premier accumulateur est de recevoir et rapprocher les articles les uns des autres de sorte à faciliter le conditionnement.

Grâce à l'invention, les articles peuvent être évacués vers un emballage ou vers un autre convoyeur. Dans sa position d'évacuation, le premier accumulateur est incliné par rapport au premier convoyeur. Cette inclinaison a pour effet avantageux de transférer les articles, sous l'effet de leur poids propre, de manière automatique. Dans le cas particulier où les articles ont une forme générale cylindrique, comme les endives, l'inclinaison permet de faire glisser ou rouler les articles vers l'emballage ou un autre convoyeur. Un intérêt, outre l'automaticité du transfert, est de limiter le contact manuel avec les articles. On améliore ainsi l'hygiène de la chaîne de conditionnement.

De manière avantageuse, la station d'amenée comporte en outre une peseuse associative pour sélectionner les articles à amener sur le premier convoyeur.

On comprend que la peseuse associative, connue par ailleurs, permet de réaliser une sélection par le poids des articles reçus par le convoyeur. Le travail de sélection et d'association des articles est ainsi facilité.

Avantageusement, la peseuse associative comporte des organes de pesée indépendants les uns des autres pour sélectionner les articles en fonction de leur poids, les organes de pesée étant quant à eux configurés pour amener les articles sélectionnés sur les moyens de réception du premier convoyeur.

Ainsi, la peseuse associative, comportant des organes de pesée indépendants les uns des autres, réalisent une sélection des articles en fonction de leur poids afin d'optimiser le regroupement desdits articles en vue de leur conditionnement. Par exemple, la peseuse associative permet d'amener sur le premier convoyeur un lot d'articles dont la masse est comprise dans une plage de valeurs prédéterminées.

En conséquence, chacun des organes de pesée permet de sélectionner et transférer les articles sélectionnés de manière aisée sur les moyens de réception du premier convoyeur et facilite le travail des opérateurs et améliore l'ergonomie de l'installation.

De manière avantageuse, selon un mode de réalisation, le premier convoyeur comporte une deuxième direction de déplacement opposée à la première direction de déplacement, et la deuxième direction de déplacement est dirigée vers une deuxième extrémité du premier convoyeur, opposée à la première extrémité.

Ainsi, la première direction de déplacement du premier convoyeur est dirigée vers la première extrémité dudit premier convoyeur tandis que la deuxième direction de déplacement est dirigée vers la deuxième extrémité du premier convoyeur.

Un intérêt de l'invention est de permettre le déplacement des articles sur le premier convoyeur selon deux directions opposées. En conséquence, les articles pourront être acheminés vers l'une ou l'autre des première ou deuxième extrémités du premier convoyeur.

De manière avantageuse, l'installation comporte un deuxième accumulateur disposé à la deuxième extrémité du premier convoyeur pour recevoir et regrouper les articles.

Ainsi, la première bande de transport du premier convoyeur est actionnée de sorte que la première bande de transport soit déplacée selon la deuxième direction de déplacement afin d'acheminer les articles vers le deuxième accumulateur. Ledit deuxième accumulateur reçoit les articles provenant de la première bande de direction du premier convoyeur. En conséquence, les articles reçus sur le deuxième accumulateur sont regroupés afin de faciliter leur conditionnement.

De préférence, l'installation comporte des moyens pour amener les articles vers l'un ou l'autre des premier et deuxième accumulateurs en fonction du poids dudit article.

Grâce à l'invention, l'installation offre une possibilité d'amener les articles en fonction de leur poids soit au premier accumulateur soit au deuxième accumulateur. Ainsi, l'installation permet d'offrir plusieurs possibilités de conditionnement des articles.

Avantageusement, lesdits moyens sont configurés pour actionner le premier convoyeur selon la première ou deuxième direction de déplacement en fonction du poids dudit article.

Ainsi, l'installation permet de grouper les articles en fonction de leur poids en les dirigeant selon la première ou deuxième direction de déplacement, et ainsi offrir plusieurs possibilités de regroupement et de conditionnement des articles.

De manière préférentielle, les moyens de réception comportent des rouleaux ayant chacun un axe de rotation parallèle à la première direction de déplacement du premier convoyeur, et les rouleaux présentent une première position dans laquelle les rouleaux sont situés à une première hauteur pour recevoir les articles provenant de la station d'amenée, et une deuxième position dans laquelle les rouleaux sont situés à une deuxième hauteur, inférieure à la première hauteur et à la première bande de transport, et l'installation comporte des moyens pour faire passer les rouleaux de la première position à la deuxième position afin de transférer les articles sur la première bande de transport du premier convoyeur.

On comprend que les rouleaux recevant les articles à une première hauteur en provenance de la station d'amenée permettent, en se positionnant à une deuxième hauteur inférieure de la première bande de transport, de positionner lesdits articles sur la première bande de transport. Les rouleaux permettent donc de recevoir puis transférer délicatement les articles sur la première bande de transport, de préférence par un déplacement vertical vers le bas, grâce à quoi les articles ne sont pas abimés lors de leur transfert.

Ainsi, les articles sont déplacés d'une position à une autre de manière aisée tout en minimisant le risque d'abimer l'article lors dudit déplacement.

Selon un aspect particulièrement avantageux de l'invention, sur la deuxième bande de transport est installée une butée configurée pour bloquer le déplacement des articles arrivant successivement sur le premier accumulateur depuis la première bande de transport du premier convoyeur.

Selon l'invention, la butée disposée sur la deuxième bande de transport du premier accumulateur permet de stopper le déplacement des articles arrivant sur la deuxième bande de transport. Un intérêt est de pouvoir rapprocher les articles les uns des autres jusqu'à ce qu'ils se touchent, grâce à quoi on réalise le rapprochement et le regroupement des articles sur la deuxième bande de transport.

De préférence, l'installation comporte des moyens de détection pour détecter l'arrivée d'un article sur le premier accumulateur, et des moyens de commande, connectés aux moyens de détection, pour déplacer la deuxième bande de transport uniquement lors de l'arrivée détectée d'un article sur le premier accumulateur, de façon à regrouper plusieurs articles sur la deuxième bande de transport en les rapprochant les uns des autres.

Les moyens de détection permettent ainsi de détecter le passage d'un article et les moyens de commande permettent de déplacer la deuxième bande de transport et la butée selon la troisième direction déplacement. Ainsi, un espace de réception est formé pour recevoir l'article détecté. On comprend donc que la deuxième bande de transport et la butée sont déplacées pour chacun des articles détectés.

De préférence, les moyens de détection sont configurés pour détecter l'arrivée de l'article à la première extrémité du premier convoyeur.

Avantageusement, dans sa position de réception, la deuxième bande de transport est inclinée par rapport à la première bande de transport pendant le regroupement des articles sur le premier accumulateur.

On comprend que l'inclinaison de la deuxième bande de transport par rapport à la première bande de transport permet de faciliter le rapprochement et le regroupement des articles sur la deuxième bande de transport.

Avantageusement, le premier accumulateur est également monté pivotant autour d'un deuxième axe perpendiculaire au premier axe, lorsque ledit premier accumulateur se trouve dans sa position de réception, le premier accumulateur étant incliné par rapport au premier convoyeur. De plus, le premier accumulateur présente une position intermédiaire dans laquelle la deuxième bande de transport est parallèle à la première bande de transport du premier convoyeur.

De manière préférentielle, l'installation comporte en outre des moyens pour faire pivoter le premier accumulateur autour du premier axe et / ou du deuxième axe.

On comprend donc que l'on passe de la position de réception à la position intermédiaire par un pivotement du premier accumulateur autour du deuxième axe.

Préférentiellement on passe ensuite de la position intermédiaire à la position d'évacuation par un pivotement du premier accumulateur autour du premier axe.

Selon un autre mode de réalisation avantageux, l'installation comporte en outre une glissière positionnée à proximité du bord latéral de la deuxième bande de transport pour guider l'évacuation des articles selon une direction perpendiculaire à la troisième direction de déplacement. Ainsi la glissière réalise le guidage et l'évacuation des articles.

Toujours selon un mode de réalisation avantageux, la glissière est configurée pour être insérée dans un sachet qui reçoit les articles regroupés.

On comprend que la glissière permet de diminuer l'effort des opérateurs lorsqu'ils doivent emballer les articles dans les sachets de conditionnement.

De manière avantageuse, la glissière est montée pivotante selon le premier axe. Ainsi, la glissière peut être orientée pour correspondre à l'inclinaison du premier accumulateur auprès duquel ladite glissière est positionnée.

De manière préférentielle, la glissière est escamotable. En d'autres termes, lorsque la glissière n'est pas utilisée pour le conditionnement des articles, ladite glissière est escamotée. Ainsi, la glissière permet de s'adapter aux contraintes de productions.

Avantageusement, la glissière comprend un cadre comportant une première et deuxième parois sensiblement parallèles l'une par rapport à l'autre, et en ce que la première et la deuxième parois sont reliées l'une à l'autre par un première et une deuxième barre parallèles l'une par rapport à l'autre.

Ainsi, le cadre forme un passage traversé par les articles évacués du premier accumulateur, et ainsi lesdits articles sont réceptionnés dans un emballage, par exemple un sachet ou encore tout autre type d'emballage.

De préférence, l'installation comporte en outre un deuxième convoyeur ayant une quatrième direction de déplacement transversale à la première direction de déplacement, le deuxième convoyeur ayant une extrémité amont de réception située à proximité du bord latéral de la deuxième bande de transport du premier accumulateur.

On comprend que les articles regroupés sur le premier accumulateur sont ensuite évacués vers le deuxième convoyeur. En conséquence, les articles se déplacent sur le deuxième convoyeur par groupe d'articles, préférentiellement serrés les uns contre les autres.

De manière avantageuse, l'installation comporte une station d'emballage des articles disposée à une extrémité aval du deuxième convoyeur.

Ainsi, l'utilisation d'une station d'emballage permet de diminuer l'effort des opérateurs lors des opérations de conditionnement.

Avantageusement, des éléments constituant l'installation comportent des moyens de roulement, par exemple des roulettes. De préférence, les convoyeurs, la station d'amenée ou encore les accumulateurs comportent des roulettes afin d'améliorer leur mobilité et ainsi optimiser l'agencement de l'installation en fonction des contraintes de production.

### Brève description des dessins

L'invention sera mieux comprise à la lecture de la description qui suit de modes de réalisation de l'invention donnés à titre d'exemple non limitatifs, en référence aux dessins annexés, sur lesquels :
- la figure **1** est une vue en perspective de l'installation ;
- la figure **2** est une vue de dessus de l'installation ;
- la figure **3** illustre un mode de réalisation de la station d'amenée et du premier convoyeur associé au premier accumulateur ;
- la figure **4** est une vue en coupe de la figure **3** lorsque les rouleaux sont à une première hauteur **h1** située au niveau de la station d'amenée ;
- la figure **5** est une vue en coupe de la figure **3** lorsque les rouleaux sont à une deuxième hauteur **h2** située à une hauteur inférieure de la première bande de transport ;
- la figure **6** est une vue en perspective d'un autre mode de réalisation de l'installation comportant un deuxième accumulateur disposé à la deuxième extrémité du premier convoyeur ;
- la figure **7** est une vue de dessus du mode de réalisation présenté en figure **6** **;**
- la figure **8** illustre le premier accumulateur lorsque la deuxième bande de transport est inclinée par rapport à la première bande de transport ;
- la figure **9** illustre le premier accumulateur lorsque la deuxième bande de transport est parallèle à la deuxième bande de transport du premier convoyeur ;
- la figure **10** illustre le premier accumulateur lorsque que ledit premier accumulateur est en position d'évacuation des articles ;
- la figure **11** illustre un autre mode réalisation comportant une glissière ; et
- la figure **12** est une vue de côté de la glissière et du premier accumulateur.

### Description détaillée de l'invention

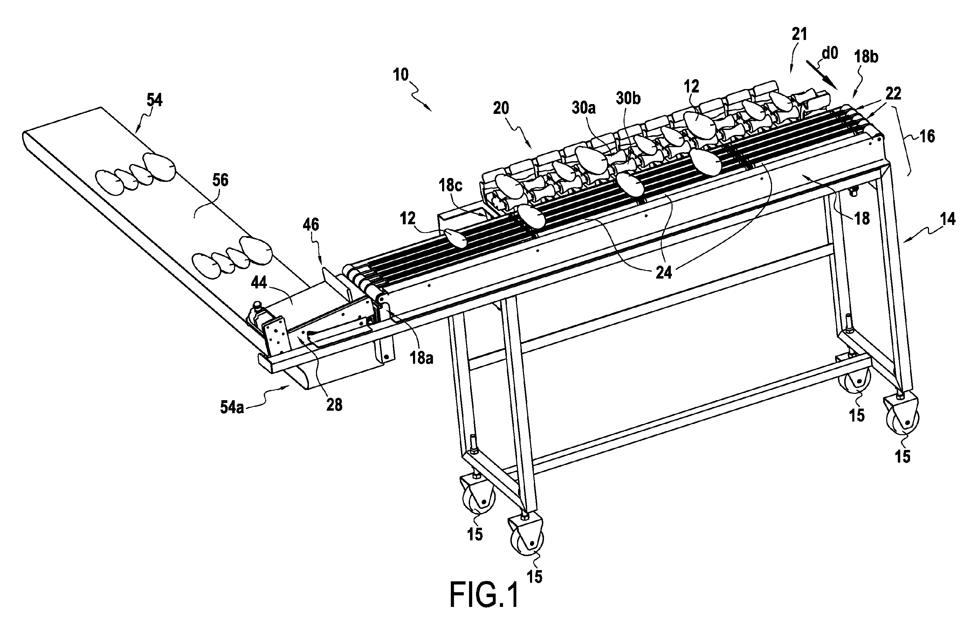

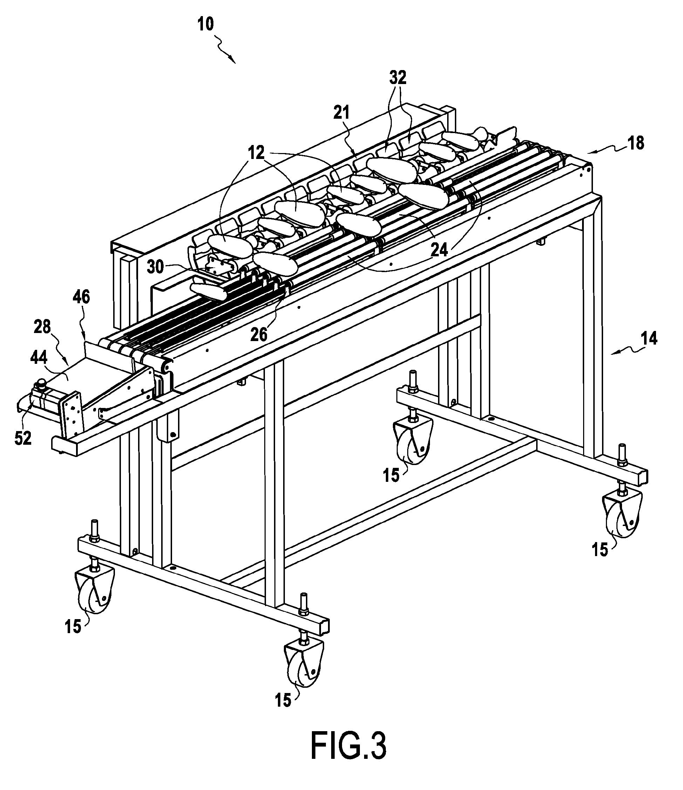

Sur les figures **1** à **3** est illustré un premier mode réalisation d'une installation **10** de regroupement d'articles **12** conforme à l'invention. Dans cet exemple, une structure **14** supportant dans sa partie supérieure **16** un premier convoyeur **18** ayant une direction longitudinale **D.** La structure **14** comporte également une station d'amenée **20** disposée à proximité du bord **latéral 18c** du premier convoyeur **18.**

En outre, la structure **14** comporte des roulettes **15** afin de positionner et de moduler l'installation **10** en fonction des contraintes de production.

Le premier convoyeur **18** et la station d'amenée **20** peuvent également être disposés sur des structures distinctes les unes des autres.

Le premier convoyeur **18** comporte une première extrémité **18a,** et une deuxième extrémité **18b.** Le premier convoyeur comporte également une première bande de transport **22** qui se déplace selon une première direction de déplacement **d1** grâce à des moyens connus et non illustrés. Dans cet exemple, la première bande de transport **22** est constitué de courroies **22.** Les courroies **22** peuvent présenter une forme ronde ou plate.

La première bande de transport **22** peut être un tout autre moyen de déplacement compatible avec la présente invention.

En outre, le premier convoyeur **18** comporte également des moyens de réception mobiles, qui comprennent des rouleaux **24** ayant un axe de rotation parallèle à la direction longitudinale **D** du premier convoyeur **18.** Lesdits rouleaux **24** sont disposés dans chaque espace **26** ménagé entre les courroies **22.**

Les moyens de réception sont par ailleurs configurés pour déplacer verticalement les rouleaux, entre les courroies **22,** et ce afin de transférer les articles arrivant sur les rouleaux **24** vers les courroies **22**

Dans cet exemple, un premier accumulateur **28** est disposé à la première extrémité **18a** du premier convoyeur **18.** Le premier accumulateur **28** fait partie de la structure **14** comprenant la station d'amenée **20** et le premier convoyeur **18.** Le premier accumulateur **28** présente une position de réception, illustrée en figure **1****,** dans laquelle il reçoit les articles. Dans l'exemple de la figure **1****,** le premier accumulateur est incliné par rapport à un deuxième axe **R1** perpendiculaire à la première direction de déplacement.

Le premier accumulateur **28** peut également être disposé sur une structure distincte de la structure comportant le premier convoyeur **18** et la station d'amenée **20.**

Cependant, on comprend que lorsque la station d'amenée **20,** le premier convoyeur **18** et le premier accumulateur **28** sont solidaires d'une même structure, l'installation **10** présente une meilleure compacité.

En outre, on constate que la station d'amenée **20** comprend une peseuse associative **21** comportant des organes de pesée **30** indépendant les uns des autres. Les organes de pesée **30** sont formés de supports cylindriques **30a, 30b** permettant de recevoir et peser les articles **12.** Les supports cylindriques **30a, 30b** ont un axe de rotation parallèle à la direction longitudinale **D** du premier convoyeur.

La peseuse associative **21** comporte des spatules **32** disposée à l'arrière de chaque organe de pesée **30.**

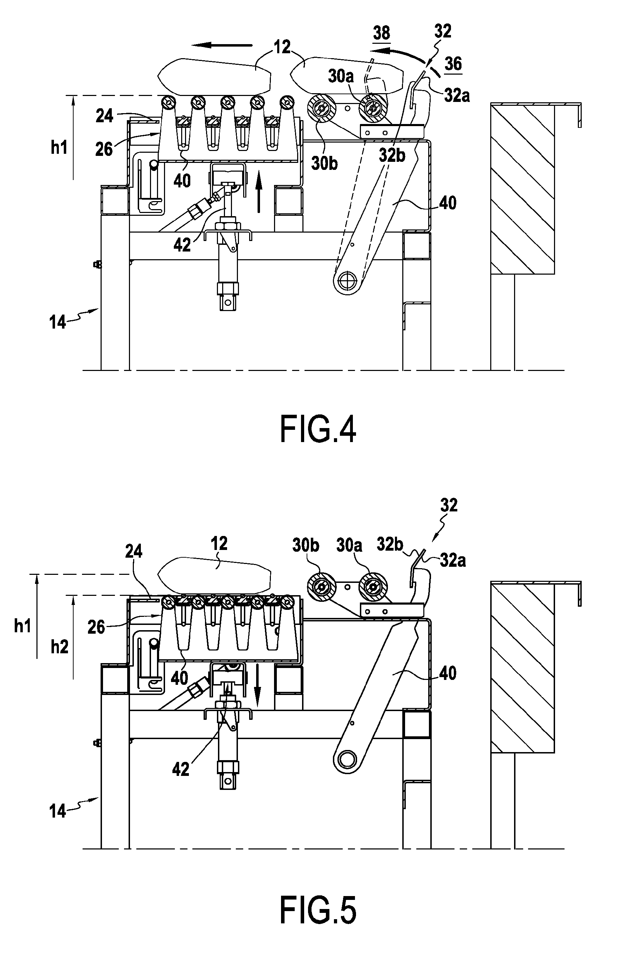

Ainsi, sur la figure **4****,** on constate que l'article **12** est disposé sur les supports cylindriques **30a, 30b** d'un des organes de pesée **30.** La spatule **32,** lorsque l'article **12** correspond au poids recherché, passe d'une position repos **36** à une position actionnée **38.**

La surface extérieure **32a** de la spatule **32** est fixée à un bras **40** monté pivotant selon l'axe de rotation parallèle à la direction longitudinale **D** du premier convoyeur **18.**

Ainsi, en position actionnée **38,** la surface intérieure **32b** de la spatule **32** vient en appui contre l'article **12** qui va se déplacer selon une direction d'amenée **d0** sensiblement perpendiculaire à la première direction de déplacement **d1.**

Grâce aux supports cylindriques **30a, 30b,** mis en rotation par réaction au déplacement de l'article **12,** le déplacement dudit article **12** est facilité.

L'article **12** déplacé est réceptionné par les rouleaux **24,** qui se trouvent alors dans une position de réception située à une première hauteur **h1** équivalente à celle des supports cylindriques **30a, 30b.**

Sur les figures **4** et **5****,** on constate que les rouleaux **24** sont reliés à une structure mobile **40** dont la direction de déplacement est perpendiculaire au plan dans lequel se situent les courroies. En outre, la structure mobile **40** est mise en mouvement par une tige **42** actionnée par des moyens de commandes.

Ainsi, lorsque l'article **12** est disposé sur les rouleaux **24,** les moyens de commande actionnent la tige **42** afin de faire descendre lesdits rouleaux **24** pour les positionner à une deuxième hauteur **h2** inférieure à celle des courroies **22** de sorte que l'article **12** est posé sur lesdites courroies **22** et n'est plus en contact avec les rouleaux **24.**

En outre, on constate sur la figure **5** que la spatule **32** est en position repos **36** lorsque les rouleaux **24** sont à la hauteur **h2.**

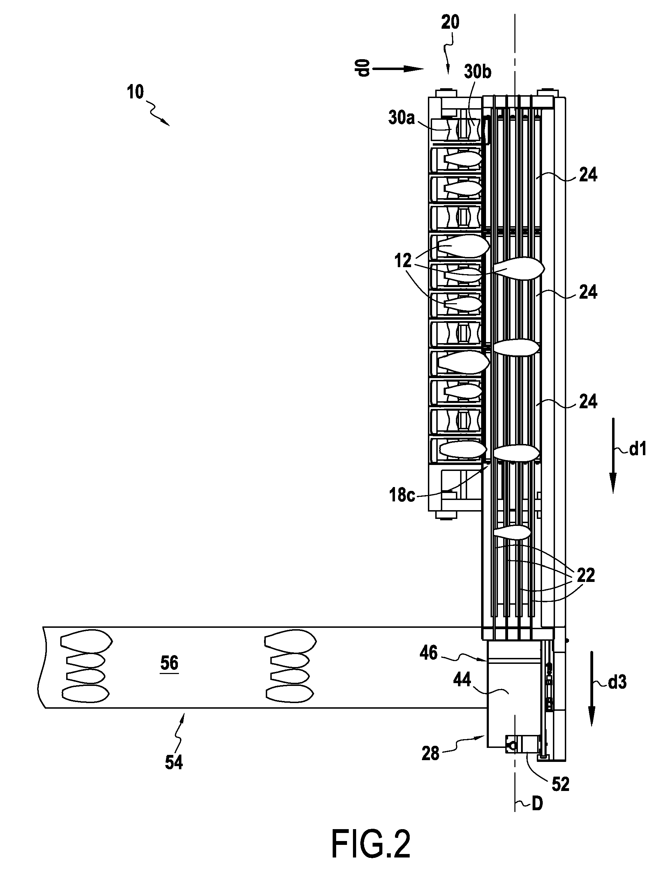

En se référant à nouveau aux figures **1** et **2****,** on observe que les articles **12** sélectionnés sont disposés sur les courroies **22.** Les courroies **22** sont actionnées afin de déplacer les articles selon la première direction de déplacement du premier convoyeur. Ainsi, les articles **12** sélectionnés sont dirigés vers le premier accumulateur **28.**

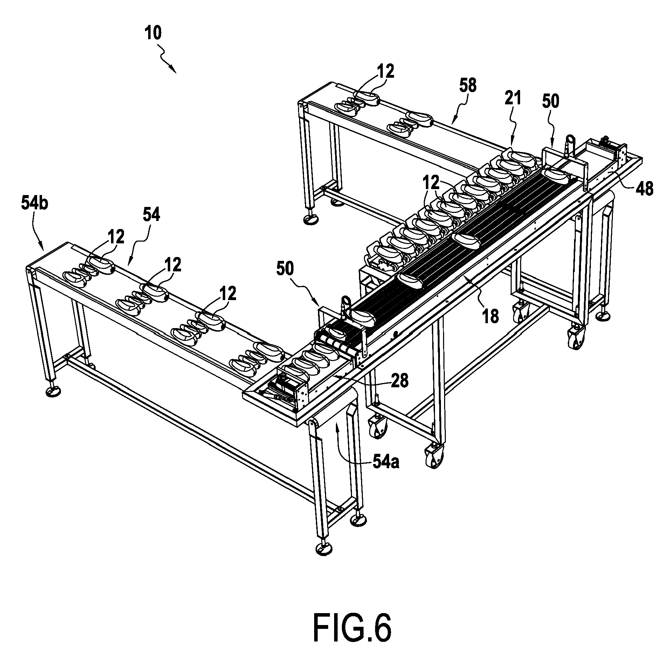

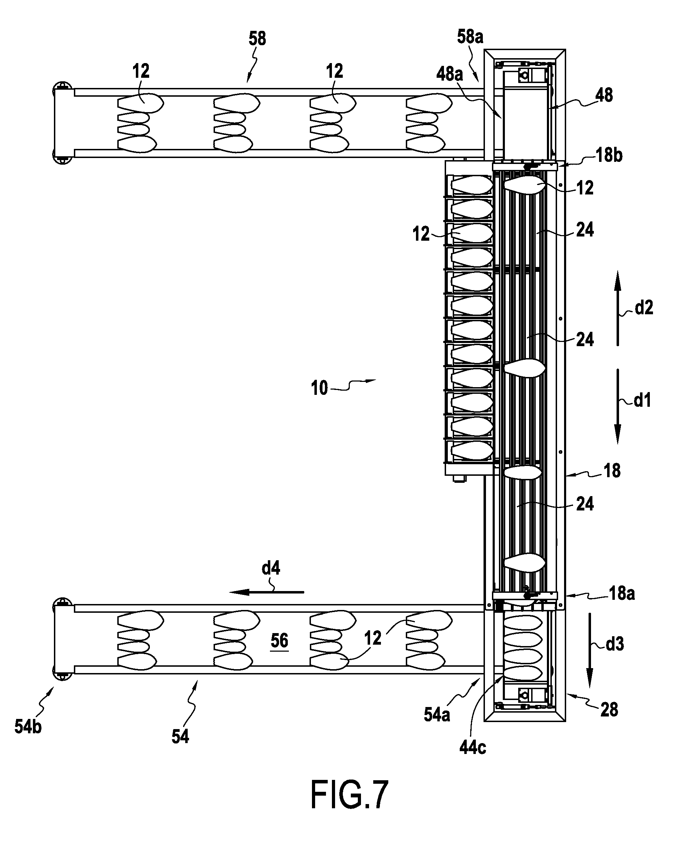

Selon un autre mode de réalisation de l'invention, illustré sur les figures **6** et **7****,** le premier convoyeur **18** présente une première direction **d1** de déplacement dirigée vers la première extrémité **18a** et une deuxième direction de déplacement dirigée vers la deuxième extrémité **18b** du premier convoyeur.

En outre, le premier accumulateur **28** comprend une deuxième bande de transport **44** sur laquelle est préférentiellement, mais pas nécessairement, fixée une butée **46** positionnée dans un plan perpendiculaire à la deuxième bande de transport **44.**

On constate que le premier accumulateur **28** est disposé à la première extrémité **18a** du premier convoyeur et qu'un deuxième accumulateur **48** est installé à la deuxième extrémité **18b** du premier convoyeur **18.**

Ainsi, on comprend que les articles **12** amenés sur le premier convoyeur **18** sont transportés selon une première direction de déplacement **d1** ou bien selon une deuxième direction de déplacement **d2** opposée à la première direction de déplacement **d1.** La direction de déplacement du convoyeur est choisie en fonction du poids de l'article **12** sélectionné et en fonction du type de lot d'articles que l'on souhaite former.

On constate également que l'installation comporte des moyens de détection **50** pour détecter l'arrivée de l'article **12** à la première extrémité **18a** ou à la deuxième extrémité **18b.** Les moyens de détection **50,** une fois l'article **12** détecté, envoie l'ordre aux moyens de commande d'actionner la deuxième bande de transport **44** du premier accumulateur **28** pour recevoir l'article **12.**

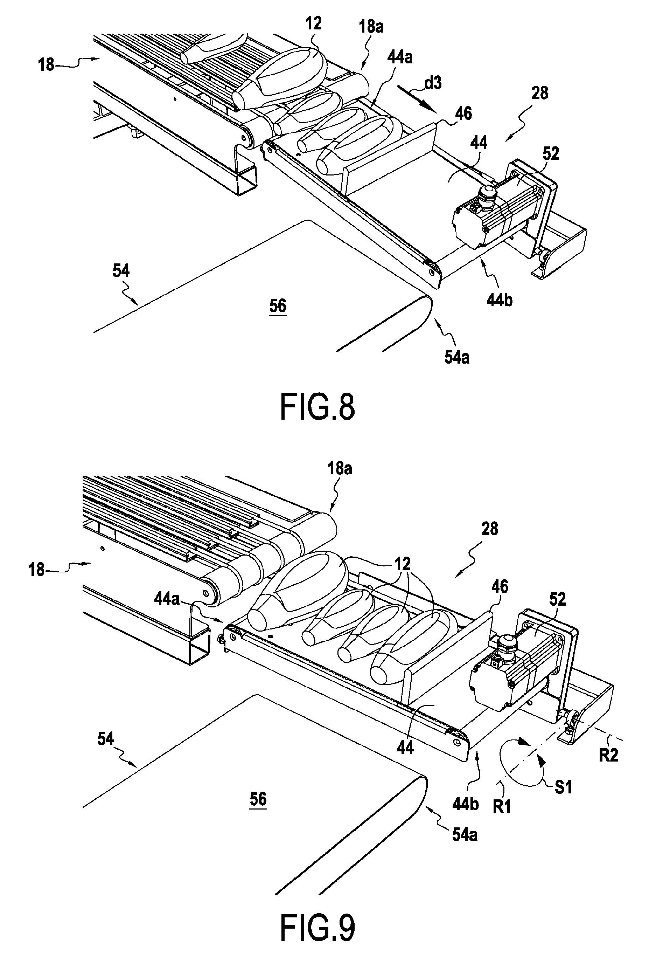

Les figures **8** à **10** illustrent l'utilisation du premier accumulateur **28** lorsque ledit premier accumulateur reçoit et regroupe les articles **12.** Il est à noter que le mode de fonctionnement du deuxième accumulateur **48** est similaire au fonctionnement de premier accumulateur **28.**

Sur la figure **8****,** la deuxième bande de transport **44** comporte une extrémité supérieure **44a** et une extrémité inférieure **44b** disposée à une hauteur inférieure à celle de l'extrémité supérieure **44a** de ladite deuxième bande de transport **44.** L'extrémité supérieure **44a** de la deuxième bande de transport est disposée à proximité de la première extrémité **18a** du premier convoyeur.

Ainsi, la deuxième bande de transport **44** est inclinée de sorte que l'article **12** provenant du premier convoyeur est réceptionné par la deuxième bande de transport **44** sans que ledit article ait subi de chute. On constate également que l'article **12** réceptionné est groupé avec les articles **12** précédemment réceptionnés sur la deuxième bande de transport **44** inclinée.

On comprend qu'un premier article **12** reçu par la deuxième bande de transport **44** vient se positionner contre la butée **46.**

En observant les figures **8** et **9****,** on constate tout d'abord que la deuxième bande de transport **44** s'est déplacée, selon une troisième direction de déplacement **d3,** afin de recevoir le premier article **12.** La butée **46** est donc déplacée en suivant le déplacement de la deuxième bande de transport **44.**

Les moyens de détection **50** ayant détectés l'arrivée d'un article à la première extrémité **18a** du premier convoyeur, lesdits moyens de détection **50** ont envoyé l'ordre aux moyens de commande du moteur pas à pas **52** de déplacer la deuxième bande de transport selon la troisième direction de déplacement **d3.** La distance de déplacement de la butée **46** est calibrée pour être sensiblement égale à l'épaisseur moyenne des articles **12.** La deuxième bande de transport **44** et la butée **46** sont déplacées selon la troisième direction de transport **d3** de sorte que l'article **12** provenant du premier convoyeur **18** est réceptionné sur la deuxième bande de transport **44** en position inclinée.

Les moyens de détection **50** sont disposés au-dessus de la première extrémité **18a** et de la deuxième extrémité **18b.** En outre, les moyens de détection 50 peuvent être constitués notamment d'un capteur optique.

Par ailleurs, comme l'illustre la figure **9****,** la deuxième bande de transport **44** est montée pivotante par rapport au premier convoyeur **18** selon le deuxième axe de rotation **R1.** Le deuxième axe de rotation **R1** est perpendiculaire à la troisième direction de déplacement **d3.**

Ainsi, lorsque les articles **12** sélectionnés sont regroupés sur la deuxième bande de transport **44,** les moyens de commande font pivoter la deuxième bande de transport **44** dans le sens **S1** selon le deuxième axe **R1** afin d'amener le premier accumulateur dans une position intermédiaire, de sorte que la deuxième bande de transport se situe dans un plan sensiblement parallèle au premier convoyeur **18.**

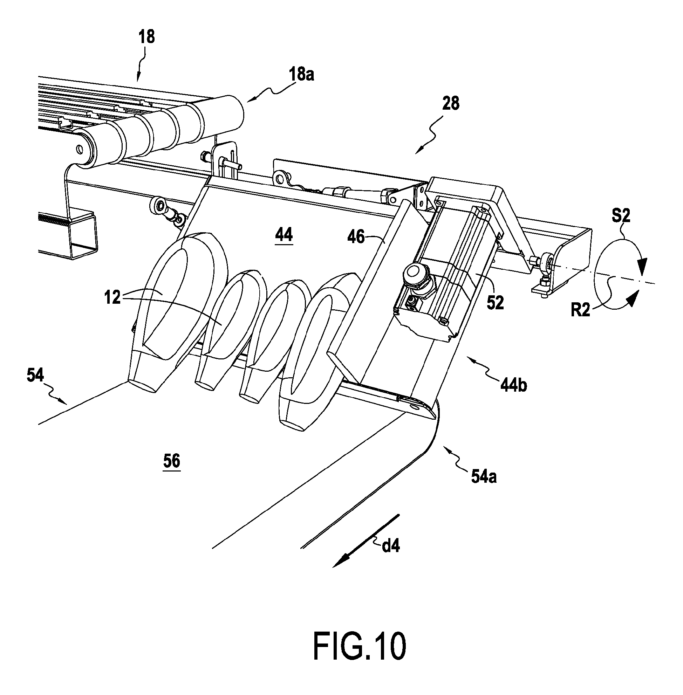

La figure **10** illustre que le premier accumulateur **28,** et donc la deuxième bande de transport **44** est monté pivotant autour du premier axe de rotation **R2** qui est parallèle à la troisième direction de déplacement **d3** de la deuxième bande de transport **44.** Ainsi après rotation selon le sens **S2,** la deuxième bande de transport **44** est disposée dans un plan incliné par rapport au plan dans lequel se situe le premier convoyeur **18,** le premier accumulateur **28** se trouve alors dans une position d'évacuation des articles.

Ainsi, la deuxième bande de transport **44** est inclinée de sorte à évacuer les articles **12** de la deuxième bande de transport **44.** La deuxième bande de transport **44** comporte en outre un revêtement diminuant les frottements de sorte à améliorer l'évacuation des articles **12.**

Sur les figures **1****,** **2****,** **6****,** **7** et **10****,** on constate la présence d'un deuxième convoyeur **54** ayant une extrémité amont **54a** disposée à proximité du bord latéral **44c** de la deuxième bande de transport **44** du premier accumulateur.

Ainsi, comme illustré sur la figure **10****,** les articles **12** regroupés sont évacués sur une troisième bande de transport **56** du deuxième convoyeur **54** ayant une quatrième direction de déplacement **d4.**

Selon un mode de réalisation non représenté, une station d'emballage des articles à l'extrémité aval **54b** du deuxième convoyeur **54.** La station d'emballage peut être une station automatisée d'emballage ou encore une station d'emballage manuel.

En outre, selon le mode de réalisation illustré sur les figures **6** et **7****,** on constate qu'un troisième convoyeur **58** dont une extrémité amont **58a** est disposé à proximité du bord latéral **48a** du deuxième accumulateur **48.**

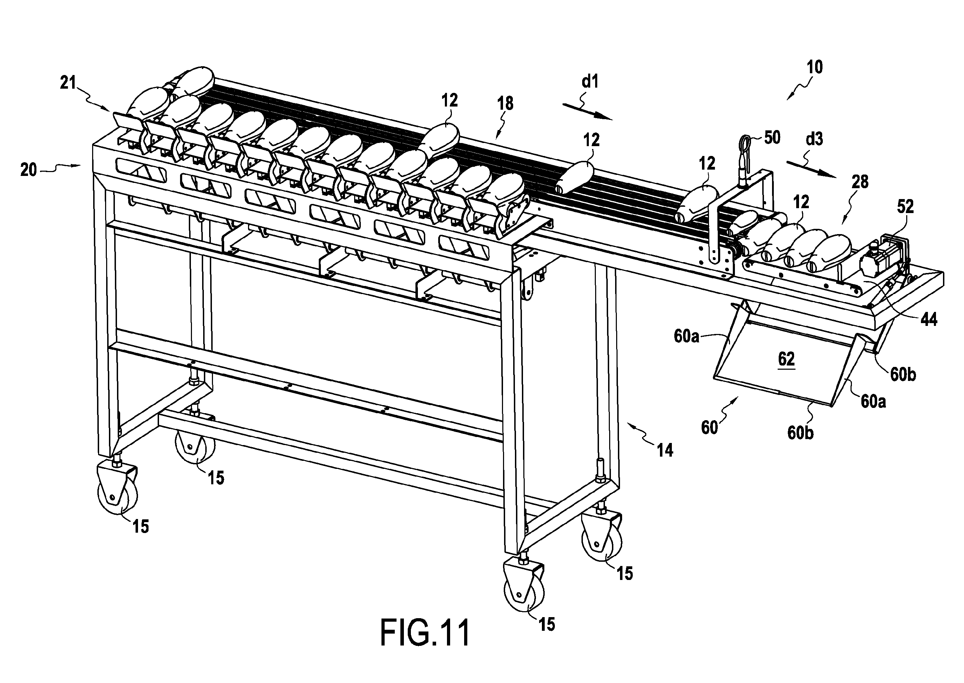

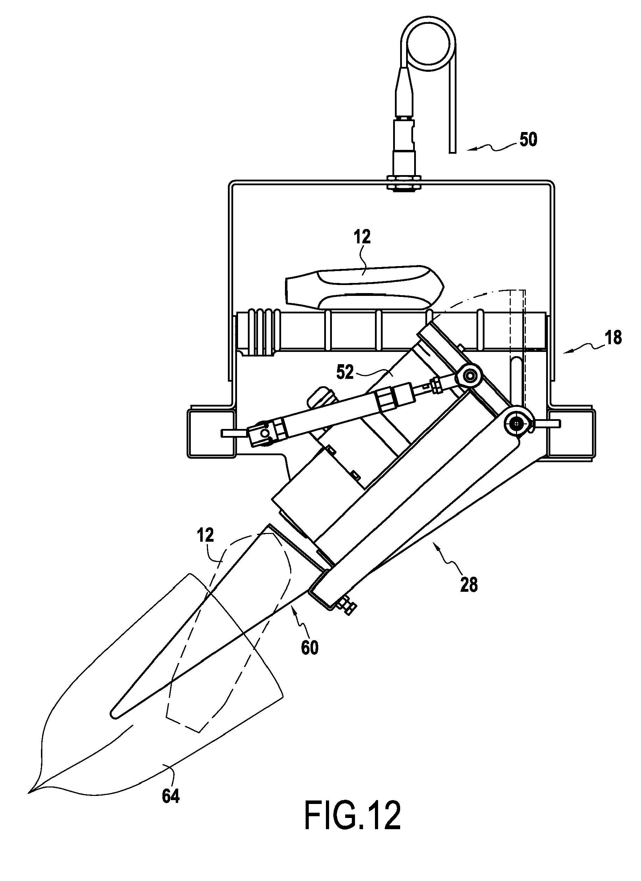

Sur les figures **11** et **12** l'installation **10** comporte une glissière **60** disposée à proximité du bord latéral **44c** de la deuxième bande du premier accumulateur **18.**

La glissière **60** est montée pivotante selon le premier axe de rotation **R2.**

En outre, la glissière **60** comporte une première et une deuxième parois **60a** parallèles l'une par rapport à l'autre. La première et deuxième parois **60a** sont reliées l'une à l'autre par une première et une deuxième barres **60b** parallèles l'une à l'autre. Ainsi, la glissière **60** forme un cadre laissant un passage **62** configuré pour laisser passer les articles **12.**

En outre, la glissière est configurée pour être entourée d'un sac **64** de conditionnement. Ainsi, les articles **12** traversent le passage **62** de la glissière **60** et sont insérés dans le sac **64** de conditionnement.

On constate sur la figure **12** que lorsque la deuxième bande de déplacement **44** du premier accumulateur **28** est inclinée par rapport au premier convoyeur **18,** les articles glissent depuis la deuxième bande de transport, traversent le passage **62** et tombent dans le sac.

## Revendications

1. Installation (10) de regroupement d'articles (12), notamment de légumes, comportant :
• un premier convoyeur (18) ayant une première direction de déplacement (d1) dirigée vers une première extrémité (18a) du premier convoyeur (18) ;
• une station d'amenée (20) des articles (12) sur le premier convoyeur (18) ;
l'installation dans laquelle la direction d'amenée (d0) est transversale à la première direction de déplacement (d1), le premier convoyeur (18) comportant une première bande de transport (22) et des moyens de réception mobiles pour positionner les articles (12) au-dessus de la première bande de transport (22), et pour transférer les articles (12) sur la première bande de transport (22) afin qu'ils soient transportés vers une première extrémité (18a) du premier convoyeur (18), et l'installation (10) comportant en outre un premier accumulateur (28) disposé à la première extrémité (18a) du premier convoyeur (18) et présente une position de réception pour recevoir et regrouper les articles (12), le premier accumulateur (28) comportant une deuxième bande de transport (44) ayant une troisième direction de déplacement (d3), **caractérisée en ce que** le premier accumulateur (28) est monté pivotant autour d'un premier axe parallèle (R2) à la troisième direction de déplacement (d3) afin de pouvoir passer dans une position d'évacuation des articles.

2. Installation (10) selon la revendication 1, **caractérisée en ce que** la station d'amenée (20) comporte en outre une peseuse associative (21) pour sélectionner les articles (12) à amener sur le premier convoyeur (18).

3. Installation (10) selon la revendication 2, **caractérisée en ce que** la peseuse associative (21) comporte des organes de pesée (30) indépendants les uns des autres pour sélectionner les articles (12) en fonction de leur poids, les organes de pesée (30) étant configurés pour amener les articles (12) sélectionnés sur les moyens de réception du premier convoyeur (18).

4. Installation (10) selon l'une quelconque des revendications 1 à 3, **caractérisée en ce que** le premier convoyeur (18) comporte une deuxième direction de déplacement (d2) opposée à la première direction de déplacement (d1), et **en ce que** la deuxième direction de déplacement (d2) est dirigée vers une deuxième extrémité (18b) du premier convoyeur, opposée à la première extrémité (18a).

5. Installation (10) selon la revendication 4, **caractérisée en ce que** l'installation comporte un deuxième accumulateur (48) disposé à la deuxième extrémité (18b) du premier convoyeur (18) pour recevoir et regrouper les articles (12).

6. Installation (10) selon la revendication 5, **caractérisée en ce que** elle comporte des moyens (22) pour amener un des articles vers l'un ou l'autre des premier et deuxième accumulateurs en fonction du poids dudit article.

7. Installation (10) selon l'une quelconque des revendications 1 à 6, **caractérisée en ce que** les moyens de réception comportent des rouleaux (24) ayant chacun un axe de rotation parallèle à la première direction de déplacement (d1) du premier convoyeur (18), **en ce que** les rouleaux (24) présentent une première position dans laquelle les rouleaux (24) sont situés à une première hauteur (h1) pour recevoir les articles (12) provenant de la station d'amenée (20), et une deuxième position dans laquelle les rouleaux (24) sont situés à une deuxième hauteur (h2), inférieure à la première hauteur et à la première bande de transport (22), et **en ce que** l'installation (10) comporte des moyens (40,42) pour faire passer les rouleaux (24) de la première position à la deuxième position afin de transférer les articles (12) sur la première bande de transport (22) du premier convoyeur (18).

8. Installation (10) selon l'une quelconque des revendications 1 à 7, **caractérisée en ce que** sur la deuxième bande de transport (44) est installée une butée (46) configurée pour bloquer le déplacement des articles (12) arrivant successivement sur le premier accumulateur (28) depuis la première bande de transport (22) du premier convoyeur.

9. Installation (10) selon l'une quelconque des revendications 1 à 8, **caractérisée en ce qu'**elle comporte des moyens de détection (50) pour détecter l'arrivée d'un article (12) à la première extrémité (18a) du premier convoyeur (18), et des moyens de commande pour déplacer la deuxième bande de transport (44) uniquement lors de l'arrivée d'un article (12) sur le premier accumulateur (28), de façon à regrouper plusieurs articles (12) sur la deuxième bande de transport (44) en les rapprochant les uns des autres.

10. Installation (10) selon l'une quelconque des revendications 1 à 9, **caractérisée en ce que** dans la position de réception du premier accumulateur, la deuxième bande de transport (44) est inclinée par rapport à la première bande de transport (22) pendant le regroupement des articles sur le premier accumulateur (28).

11. Installation (10) selon l'une quelconque des revendications 1 à 10, **caractérisée en ce que** le premier accumulateur (28) est également monté pivotant autour d'un deuxième axe (R1) perpendiculaire au premier axe (R2), **en ce que** le premier accumulateur (28) est incliné par rapport au premier convoyeur lorsque ledit premier accumulateur (28) se trouve en position de réception et **en ce que** le premier accumulateur (28) présente une position intermédiaire dans laquelle la deuxième bande (44) de transport est parallèle à la première bande de transport (22) du premier convoyeur.

12. Installation (10) selon la revendication 11, **caractérisée en ce qu'**elle comporte en outre des moyens pour faire pivoter le premier accumulateur (28) autour du premier axe (R2) et / ou du deuxième axe (R1).

13. Installation selon l'une quelconque des revendications 1 à 12, **caractérisée en ce qu'**elle comporte en outre une glissière (60) positionnée à proximité du bord latéral (44c) de la deuxième bande de transport (44) pour guider le déplacement des articles selon une direction perpendiculaire à la troisième direction de déplacement.

14. Installation (10) selon la revendication 13, **caractérisée en ce que** la glissière (60) est montée pivotante autour du premier axe parallèle (R2).

15. Installation (10) selon la revendication 14, **caractérisée en ce que** la glissière (60) est escamotable.

16. Installation (10) selon l'une quelconque des revendications 13 à 15, **caractérisée en ce que** la glissière (60) comprend un cadre comportant une première et deuxième parois (60a) sensiblement parallèles l'une par rapport à l'autre, et **en ce que** la première et la deuxième parois (60a) sont reliées l'une à l'autre par une première et une deuxième barres (60b) parallèles l'un par rapport à l'autre.

17. Installation (10) selon l'une quelconque des revendications 1 à 16, **caractérisée en ce qu'**elle comporte un deuxième convoyeur (54) ayant une quatrième direction de déplacement (d4) transversale à la première direction de déplacement (d1), le deuxième convoyeur (54) ayant une extrémité amont (54a) de réception située à proximité du bord latéral (44c) de la deuxième bande de transport (44).

18. Installation (10) selon la revendication 17, **caractérisée en ce qu'**elle comporte une station d'emballage des articles disposée à une extrémité aval (54b) du deuxième convoyeur (54).
